# EUROPÄISCHE PATENTSCHRIFT

(11) **EP 1 711 782 B1**
(45) Veröffentlichungstag und Bekanntmachung des Hinweises auf die Patenterteilung: **04.01.2012**
(21) Anmeldenummer: 05706942.9
(22) Anmeldetag: 21.01.2005
(51) Int. Cl.: G01F 23/26

(54) **VORRICHTUNG ZUR KAPAZITIVEN FÜLLSTANDSMESSUNG**
DEVICE FOR CARRYING OUT THE CAPACITIVE MEASURING OF FILLING LEVELS
DISPOSITIF DE MESURE DE NIVEAU CAPACITIF

(30) Priorität: 27.01.2004 DE 102004004923
(43) Veröffentlichungstag der Anmeldung: 18.10.2006
(73) Patentinhaber: Bayer, Frank, 63571 Gelnhausen (DE)
(72) Erfinder: HOFFMEIER, Matthias, 13465 Berlin (DE)
(74) Vertreter: Fuhlendorf, Jörn
(86) Internationale Anmeldenummer: PCT/EP2005/000565
(87) Internationale Veröffentlichungsnummer: WO 2005/071369

(56) Entgegenhaltungen:
- FR-A- 2 752 053
- US-A- 4 434 657
- US-A- 4 731 730
- US-A1- 2002 166 803
- US-B1- 6 275 048

## Beschreibung

Die vorliegende Erfindung bezieht sich auf eine Vorrichtung zur kapazitiven Füllstandsmessung in einem Behälter, nach dem Oberbegriff des Anspruchs 1.

Bei einer aus der DE 38 24 231 A1 bekannten Vorrichtung zur kapazitiven Füllstandsmessung in einem Behälter, der dort aus elektrisch nicht leitendem Material ist, ist die Sondenanordnung mit einer hochfrequenten Wechselspannung aus einem Oszillator gespeist, wobei sich der in den Stromkreis der Sondenanordnung fließende hochfrequente Messwechselstrom in seiner Größe in Abhängigkeit von der Kapazität zwischen den beiden Sonden ändert. Der Messwechselstrom wird in ein Messwertsignal umgewandelt, das einem Auswertegerät zugeführt wird. Um aufgrund dieses hochfrequenten Messwechselstroms den Einfluss von Stör- und Streukapazitäten auf die Füllstandsmessung zu reduzieren, ist in der Verbindungsleitung zum Auswertegerät eine Filteranordnung vorgesehen, die die Übertragung des hochfrequenten Wechselstroms verhindert und die Übertragung des Messwertsignals zulässt.

Eine Vorrichtung zur kapazitiven Füllstandsmessung in einem Behälter mit flüssigem oder festem Füllgut der eingangs genannten Art ist aus der US 2002/0 166 803 A1 bekannt geworden. Diese bekannte Vorrichtung ist in einem Gerät zum Entfernen von Fettabsonderungen von Wasser eingesetzt und dient zum mittelbaren Messen der Dicke der Fettabsonderung dadurch, dass ausschließlich der Wasserpegel im betreffenden Tank gemessen wird. Die Messsonde besitzt einen elektrisch leitenden Stab, die in einer Kunststoffhülse angeordnet ist, und ist mit außerhalb des Tank angeordneten Schaltkreisen verbunden.

Aus der US 4 434 657 A ist eine Vorrichtung zur Messung und Anzeige des Füllstands einer Flüssigkeit in einem Behälter, wie beispielsweise Benzin in einem Speichertank, beschrieben. Die Sonde ist durch mehrere konzentrisch zueinander angeordnete Metallröhrchen zum Erreichen einer großen Elektrodenoberfläche und zum Erreichen einer relativ großen Elektrodenlänge gebildet. Die Messanordnung mit Mikrocomputer ist außerhalb des betreffenden Behälters angeordnet.

Aus der FR 2 752 053 A ist eine Sonde zum kapazitiven Messen des Flüssigkeitsniveaus in einem Behälter bekannt, wobei die Sonden zwei im Abstand parallele länglich rechteckförmige Platten aufweisen, die in einer einen Deckel des Behälters durchdringenden Gewindebuchse gehalten sind, über der ein elektronischer Schaltkreis vorgesehen ist. Die Berücksichtigung unterschiedlicher Flüssigkeiten und Behälterformen ist nicht vorgesehen.

Aus der US 6 275 048 B1 ist eine kapazitive Sensoranordnung in einem flüssigen oder gasförmigen Medium vorgesehen, bei dem die Sonde aus mehreren aufeinander geschichteten länglich rechteckförmigen Platten aufgebaut ist, die an ihrem oberen Ende mit einer nicht näher dargestellten Auswerteschaltung versehen sind.

Aus der US 4 731 730 ist ein Kraftstoffmengenanzeigegerät bekannt, beim dem zwar eine Mikroprozessorsteuereinheit zur Berücksichtigung verschiedener spezieller Kraftstofftanks beschrieben ist, wobei jedoch keine konstruktive Ausgestaltung des Sensors beschrieben ist.

Aus der DE 40 06 998 A1 ist schließlich ein Füllstandsanzeiger für Waschmaschinen bekannt geworden, der ausschließlich der Wasserfüllstandsanzeige in der Waschtrommel dient und bei dem ein mit der Sonde verbundener Mikroprozessor sich außerhalb der Trommel im Waschmaschinengehäuse befindet.

Aufgabe der vorliegenden Erfindung ist es, eine Vorrichtung zur kapazitiven Füllstandsmessung in einem Behälter der eingangs genannten Art zu schaffen, die von Stör- bzw. Streukapazitäten bei der Messung weniger abhängig ist.

Zur Lösung dieser Aufgabe sind bei einer Vorrichtung zur kapazitiven Füllstandsmessung der genannten Art die im Anspruch 1 angegebenen Merkmale vorgesehen.

Durch die erfindungsgemäßen Maßnahmen ist eine einfachere Messung bei reduziertem Bauaufwand erreicht. Darüber hinaus können aufgrund der Messvorgabe der beiden Extremwerte des Füllstands eines Behälters die Einflüsse von Stör- und Streukapazitäten erheblich gemindert werden. Außerdem lässt sich in einfacher Weise zum einen die Form eines Behälters und zum anderen die Art des Füllgutes für eine entsprechende "Interpolation" von Zwischenfüllständen vorgeben. Im ersteren Falle kann die Beziehung in einfachster Weise linear sein, aber auch beliebige Komplexität annehmen. Dies berücksichtigt dabei gleichzeitig auch den Einsatz- bzw. Aufstellungsort eines derartigen Behälters. Im zweiten Falle ist für die "Interpolation" bereits die Art des Füllgutes, ob flüssig oder fest und auch gleichzeitig der jeweilige Typ vorgegeben.

Vorteilhafte konstruktive Ausgestaltungen ergeben sich durch die Merkmale der Ansprüche 2 und/oder 3.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist.

Es zeigen:

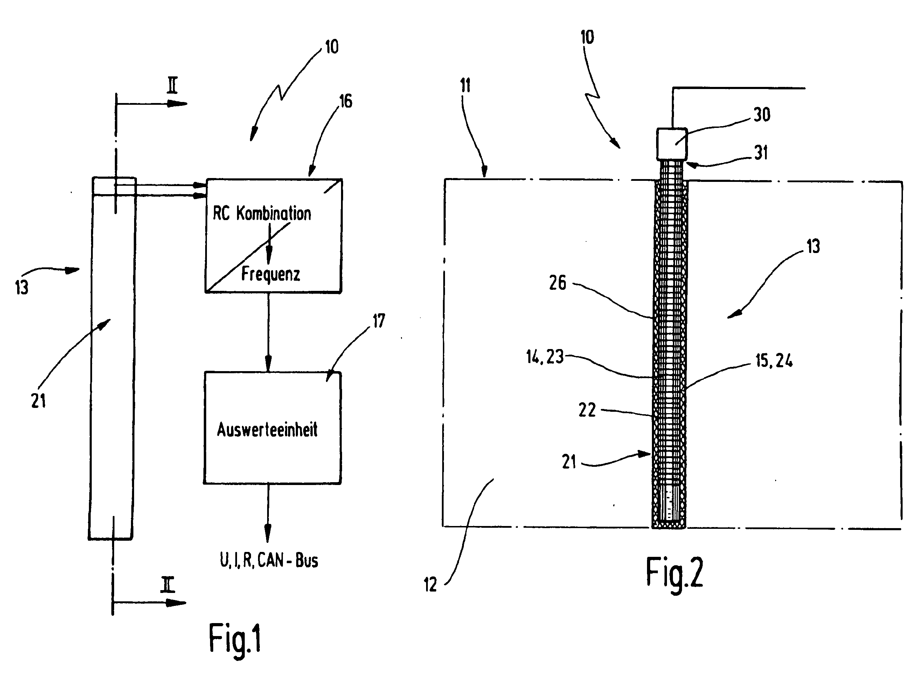

- Figur 1: in schematischer Darstellung eine Sensoranordnung mit einem zugehörigen elektrischen Blockschaltbild für eine Vorrichtung zur kapazitiven Füllstandsmessung in einem Behälter,
- Figur 2: einen Schnitt längs der Linie II-II der Figur 1 durch die Sondenanordnung, wobei ein entsprechender Behälter strichpunktiert dargestellt ist.

Die in der Zeichnung dargestellte Vorrichtung 10 zur kapazitiven Füllstandsmessung in einem Behälter 11 ist dazu geeignet in beliebig geformten Behältern 11 mit beliebig befülltem bzw. zu bef üllendem Gut 12 den Fülls tand zu messen. Dabei können die Behälter aus elektrisch leitendem oder nicht leitendem Material und offen oder geschlossen sein. Das Gut kann flüssig oder fest in Form von Schüttgut sein. Als Flüssiggut kommen Wasser oder beispielsweise Treibstoffe, Lösungsmittel, Säuren, Laugen und dgl. in Frage, während als Schüttgut beispielsweise Sand und andere Industrieprodukte oder beispielsweise Korn und andere landwirtschaftliche Produkte in Frage kommen.

Die Vorrichtung 10 besitzt eine in den Behälter 11 eintauchende und über dessen gesamte Füllhöhe verlaufende Sondenanordnung 13, die mit Sonden 14 und 15 sowie einer elektrischen Beschaltung 16 versehen und mit einer Auswerteeinheit 17 verbunden ist. Die Messung mit der Vorrichtung 10 erfolgt in der Weise, dass die Sonden 14 und 15 der Sondenanordnung 13 einen Kondensator bilden, dessen Kapazität sich in Abhängigkeit vom Füllgut 12 und in Abhängigkeit vom Füllstand des Füllguts 12 ändert. Zur Auswertung der Messung ist der durch die Sonden 14 und 15 gebildete Kondensator in einem elektrischen Schwingkreis angeordnet, der eingangsseitig mit einer Spannungsversorgung, hier einer Gleichspannungsversorgung im Bereich zwischen 3 Volt und 48 Volt verbunden ist und dessen Frequenzmessausgang zur Auswerteeinheit 17 führt.

Die Sondenanordnung 13 besitzt ein Sensorschwert 21, das einen plattenförmigen Träger 22 aus elektrisch isolierendem Material, vorzugsweise Epoxydharz, besitzt. Der plattenförmige Isolierträger 22 ist beim Ausführungsbeispiel eine Platine, die mit einer gedruckten Leiter- bzw. Schaltungsanordnung versehen ist. Hierzu ist die Trägerplatine 22 auf ihren beiden großflächigen Seiten jeweils mit einem metallischen, vorzugsweise Kupferleiter 23 bzw. 24 versehen, der die Sonde 14 bzw. die Sonde 15 bildet. Die Trägerplatine 22 ist insgesamt von einer elektrischen Isolation 26 umgeben, d.h. sowohl an ihren beiden großflächigen Seiten, als auch an ihren längs verlaufenden Stirnseiten und an ihrer unteren Querseite. Die obere Querstirnfläche der Trägerplatine 22 ragt aus dem Behälter 11.

Durch diese Anordnung der beiden Leiterbahnen 23 und 24 bilden die dadurch entstehenden Sonden 14 und 15 auf der Trägerplatine 22 über das als Dielektrikum dienende Füllgut 12 einen Kondensator mit vom Füllgut und dessen Füllstandshöhe abhängiger Kapazität. Dieser durch die Sonden 14 und 15 gebildete Kondensator ist in einen elektrischen Schwingkreis integriert, dessen übrige Bauelemente ebenfalls auf der Trägerplatine 22 gebildet bzw. gehalten sind. Beispielsweise besitzt der elektrische Schwingkreis außer dem Sonden-Kondensator weitere Bauelemente in Form eines Widerstandes und/oder eines Kondensators und/oder einer Induktivität. Die Zuleitungen zum Schwingkreis sind ebenfalls auf der Trägerplatine 23 festgelegt und aus dem Behälter 11 herausgeführt. Das gleiche gilt für die am Schwingkreis abgenommenen Messleitungen.

Die beiden Messleitungen sind mit einem Mikrocomputer 30 verbunden, der am Kopf 31 des Sensorschwerts 21, d.h. an dessen aus dem Behälter 11 herausragenden Ende angeordnet ist.

Bei einem nicht dargestellten Ausführungsbeispiel einer Vorrichtung zur kapazitiven Füllstandsmessung sind zwei oder mehr sondenpaare bzw. Sensorschwerter in einem Behälter dicht nebeneinander angeordnet, wobei die dadurch entstehenden zwei oder mehr Kondensatoren elektrisch parallel geschaltet sind.

Diese Parallelschaltung aus zwei oder mehr Kondensatoren ist in den genannten elektrischen Schwingkreis integriert. Die Anzahl der Sondenpaare kann abhängig von der Dielektrizitätskonstanten des Füllgutes abhängig ausgewählt werden.

Bei der Vorrichtung 10 zur kapazitiven Füllstandsmessung wird zur Messung des Füllstands bei konstanter Gleichspannungsversorgung die sich durch Änderung des Füllstands ändernde Frequenz im elektrischen Schwingkreis vom Mikrocomputer 30 erfasst, bewertet und in der Auswerteeinheit 17 ausgewertet und in eine proportionale Größe, wie Spannung, Strom, Widerstand umgewandelt und einer Messanzeige zugeführt.

Für eine Eichung der Vorrichtung 10 auf einen bestimmten Behältertyp bzw. -form und auf ein bestimmtes Füllgut 12, wird die Frequenz des Schwingkreises bei vollständig leerem und bei vollständig gefülltem Hehälter 11 gemessen und die so entstehende Ausgangsfrequenz in einem Schreib-Lese-Speicher des Mikrocomputers 30 eingelesen. Je nach der Form des Behälters 11 wird in den Mikrocomputer 30 eine Interpolations-Kennlinie eingegeben, die beispielsweise bei einem aufrecht stehenden zylindrischen Behälter 11 eine lineare Kennlinie ist.

Es versteht sich, dass die Kennlinie je nach Form des Behälters 11 auch komplexer sein kann. Damit ist es möglich, für jeden Aufstellungsort, jede Behälterform und jeden Füllguttyp den Mikrocomputer 30 bzw. die Gesamtvorrichtung entsprechend zu eichen.

Die Messung bzw. Auswertung der sich ausgangsseitig am Schwingkreis ergebenden Frequenz durch den Mikrocomputer 30 kann permanent oder abschnittsweise permanent in der Weise erfolgen, dass beispielsweise mindestens 20 Werte während eines bestimmten Zeitraumes ermittelt und diese dann gemittelt oder integriert werden. Auf diese Weise ist eine festgelegte bzw. feste Füllstandsanzeige bei in Fahrzeugen untergebrachten Behältern, wie Tanks, möglich.

## Patentansprüche

1. Vorrichtung (10) zur kapazitiven Füllstandsmessung in Einern beliebig geformten Behälter (11) mit flüssigem oder festem Füllgut, mit zwei gegeneinander und gegenüber dem Behälterinneren isolierten, beabstandeten metallische Sonden (14, 15), die einen Messkondensator mit vom Füllstand im Behälter abhängiger Kapazität bilden, mit einer Spannungsversorgung und mit einer Auswerteeinheit (17) zur Ermittlung des Füllstandes, wobei der Messkondensator als Frequenz bestimmendes Glied in einem elektrischen Schwingkreis angeordnet ist und die Auswerteeinheit (17) einen Mikrocomputer (30) mit einem Schreib-Lese-Speicher beinhaltet, in welchem Speicher die den Zuständen "voll" und "leer" nach Messung zugeordneten Frequenzen einlesbar und speicherbar sind, wobei die beiden Sonden (14, 15) zu einem Sensorschwert (21) vereinigt sind, das auf einem elektrischen Isolierträger (22) beiderseits die eine bzw. andere Sonde (14, 15) trägt, wobei der Isolierträger durch eine Platine (22) gebildet ist, die zur Bildung der Sonden (14, 15) mit Leiterbahnen (23, 24) und mit weiteren Bauelementen zum Vervollständigen des elektrischen Schwingkreis und mit den Spannungsversorgungs- sowie Messleitungen bestückt ist, und wobei das Sensorschwert von einer elektrischen Isolation (26) überzogen ist, **dadurch gekennzeichnet, dass** in dem aus dem Behälter (11) ragenden Kopf (31) des Sensorschwerts (21) der Mikrocomputer (30) untergebracht ist, in dessen Schreib-Lese-Speicher eine von der Form des Behälters (11) abhängige Interpolations-Kennlinie zwischen Füllstand und Frequenz und eine von der Art des Füllguts abhängige Beziehung bzw. Kennlinie zwischen Dielektrikum und Frequenz eingegeben ist.

2. Vorrichtung nach Anspruch 1, **dadurch gekennzeichnet, dass** zwei oder mehr Paare von Sonden (14, 15) zu einem aus zwei oder mehr parallel geschalteten Einzelkondensatoren bestehenden Messkondensator vereinigt sind.

3. Vorrichtung nach Anspruch 2, **dadurch gekennzeichnet, dass** zwei oder mehr Sensorschwerter (21) dicht nebeneinander angeordnet sind.

## Claims

1. Device (10) for capacitive fill level measurement in a container (11) of any shape with a liquid or solid filling material, comprising two probes (14, 15) spaced apart from one another which are insulated relative to one another and relative to the interior of the container, said probes forming a measuring capacitor having a capacitance that is dependent on the fill level in the container, and comprising a voltage supply and an evaluating unit (17) for determining the fill level, wherein the measuring capacitor is arranged as a frequency-determining member in an electrical oscillating circuit and the evaluating unit (17) comprises a microcomputer (30) with a read-write memory into which the frequencies assigned to the states "full" and "empty" after measurement can be read-in and stored, wherein the two probes (14, 15) are unified into a sensor wand (21) which supports the probes (14, 15), one on each side of an electrically insulating carrier (22), wherein the insulating carrier is formed from a circuit board (22) which, in order to form the probes (14, 15) is provided with conductor tracks (23, 24) and other components for completing the electrical oscillating circuit and with the voltage supply and measuring lines, wherein the sensor wand is covered with an electrical insulation (26), **characterised in that** accommodated in the head (31) of the sensor wand (21) projecting out of the container (11) is the microcomputer (30) into the read-write memory of which an interpolation characteristic curve between fill level and frequency dependent on the form of the container (11) and a relation or characteristic curve between dielectric and frequency dependent on the type of filling material is input.

2. Device according to claim 1, **characterised in that** two or more pairs of probes (14, 15) are unified into a measuring capacitor comprising two or more individual capacitors connected in parallel.

3. Device according to claim 2, **characterised in that** two or more sensor wands (21) are arranged close to one another.

## Revendications

1. Dispositif (10) de mesure capacitive du niveau dans un récipient de forme quelconque (11) recevant un contenu liquide ou solide, avec deux sondes métalliques (14, 15) distantes l'une de l'autre et isolées l'une par rapport à l'autre et par rapport à l'intérieur du récipient, lesquelles sondes forment un condensateur de mesure dont la capacité dépend du niveau de remplissage du récipient, et avec une source de tension ainsi qu'une unité d'évaluation (17) permettant de déterminer le niveau de remplissage, le condensateur de mesure étant agencé en tant qu'élément déterminant la fréquence dans un circuit électrique oscillant, et l'unité d'analyse (17) comportant un microordinateur (30) avec une mémoire d'écriture-lecture, dans laquelle les fréquences associées aux états « plein » et « vide » après la mesure peuvent être enregistrées et mises en mémoire, les deux sondes (14, 15) étant réunies en une tige de détection (21) qui supporte de part et d'autre d'un support électriquement isolant (22) l'une et l'autre sonde (14, 15), le support isolant étant formé par une platine (22) qui, pour former les sondes (14, 15), est équipée de pistes conductrices (23, 24) et d'autres composants pour compléter le circuit électrique oscillant ainsi que des conducteurs d'alimentation électrique et de mesure, la tige de détection étant recouverte d'un isolant électrique (26), **caractérisé en ce que** dans la tête (31) de la tige de détection (21), qui dépasse du récipient (11), est logé le microordinateur (30) dans la mémoire d'écriture-lecture duquel est enregistrée une courbe d'interpolation, dépendant de la forme du récipient (11), entre le niveau et la fréquence ainsi qu'une courbe ou une relation, dépendant de la nature du contenu, entre le diélectrique et la fréquence.

2. Dispositif selon la revendication 1, **caractérisé en ce qu'**au moins deux paires de sondes (14, 15) sont réunies en un condensateur de mesure composé d'au moins deux condensateurs élémentaires montés en parallèles.

3. Dispositif selon la revendication 2, **caractérisé en ce qu'**au moins deux tiges de mesure (21) sont agencées près l'une de l'autre.
